# EUROPEAN PATENT APPLICATION

(11) **EP 4 817 811 A1**
(43) Date of publication of application: **07.10.2026**
(21) Application number: 26169474.9
(22) Date of filing: 31.03.2026
(51) Int. Cl.: B25J 9/16

(54) **SYSTEM AND METHOD TO DETERMINE OPERATIONAL WORKAROUNDS FOR ANOMALIES DURING OPERATION OF A ROBOTIC SYSTEM**

(30) Priority: 31.03.2025 US 202563780755 P
(71) Applicant: MacDonald, Dettwiler and Associates Inc., Brampton, Ontario L6Y 6K7 (CA)
(72) Inventor: EL SAMID, Nader Abu, Brampton, L6Y 6K7 (CA); PLEAVA, Alexander George, Brampton, L6Y 6K7 (CA); SHOJI, Yoshiki, Brampton, L6Y 6K7 (CA); KOBILASKI, Val, Brampton, L6Y 6K7 (CA)
(74) Representative: Worsley, Theo Morgan

(57) **Abstract**

A system and method for detecting and resolving anomalies in a remotely operated device system is provided. The system includes: an anomaly detection module, executed by at least one processor, configured to detect an anomaly in telemetry collected during execution of a procedure by a remotely operated device, the procedure comprising a sequence of commands for the remotely operated device to follow; an anomaly workaround module, executed by the at least one processor, implementing a trained policy configured to generate a set of one or more higher level commands that modifies the procedure to respond to the anomaly, the trained policy configured using a reinforcement learning algorithm; and a controller module, executed by the at least one processor, configured to translate or interpret the set of one or more higher level more commands into a set of one or more lower level commands to be executed by the remotely operated device.

## Description

### Technical Field

The following relates generally to robotic systems, and more particularly to systems and methods for training and use of a reinforcement learning system for determining and executing operational workarounds for anomalies experienced by a robotic system.

### Introduction

In the context of operation of robotic systems, when an anomaly is diagnosed and identified, operational workarounds to the anomaly need to be determined by simulating the issue in a test environment and formulating techniques to resolve or accommodate the problem to continue safe and effective operation of the robotic system.

Traditionally, in off-nominal planning scenarios, workarounds are found using a combination of human operations experience and trial and error methods in simulations. These workarounds can take a long time to determine and are often not optimal solutions. In nominal planning scenarios, identifying workaround is an unoptimized process, where planners typically only consider kinematic constraints such as clearances and keep-out zones when determining a trajectory for the robotic system to follow. Further, nominal planning scenarios can benefit from minimizing the time required to complete an operation with consideration for maximizing chances of mission success while minimizing wear and tear on the robotic system, or for preventing safety issues such as violation of flight and contingency planning load limits.

Because factors such as dynamics and performance criteria are not evaluated in the traditional planning process, non-ideal configurations of the robotic system for operations are often chosen, requiring complex operational workaround to compensate for the low chances for mission success resulting from selection of such non-ideal configurations. Non-ideal configurations of the robotic system are often chosen because no tool is currently available to assist an operator with solving such multidimensional problem.

Accordingly, there is a need for an improved system and method for determining operational workarounds for anomalies occurring during operation of a robotic system that overcomes at least some of the disadvantages of existing systems and methods.

### Summary

A system for detecting and resolving anomalies in a remotely operated device system is provided. The system includes: an anomaly detection module, executed by at least one processor, configured to detect an anomaly in telemetry collected during execution of a procedure by a remotely operated device, the procedure comprising a sequence of commands for the remotely operated device to follow; an anomaly workaround module, executed by the at least one processor, implementing a trained policy configured to generate a set of one or more higher level commands that modifies the procedure to respond to the anomaly, the trained policy configured using a reinforcement learning algorithm; and a controller module, executed by the at least one processor, configured to translate or interpret the set of one or more higher level more commands into a set of one or more lower level commands to be executed by the remotely operated device.

In an embodiment, the trained policy is implemented as parameters of a neural network that takes in a state space as input and outputs a probability distribution of actions to take within that state space.

In an embodiment, the state space is a vectorized representation of a current state of the environment.

In an embodiment, the state space is constructed with hand-engineered features.

In an embodiment, the hand-engineered features are directly taken from the environment or from higher order observations.

In an embodiment, the hand-engineered features taken directly from the environment include positions of obstacles and sensor readings and the hand-engineered features taken from higher order observations include relative distance between two objects within the environment.

In an embodiment, the set of one or more lower level commands comprises actuator signals for one or more subsystems of the remotely operated device.

In an embodiment, the actuator signals comprise motor voltages or motor currents.

In an embodiment, the set of one or more lower level commands comprise joint torque, joint velocity, joint angle, or motor movement.

In an embodiment, the procedure is a contact operation between the remotely operated device and a payload on which the remotely operated device acts.

In an embodiment, the set of one or more higher-level commands comprises a joint command, an arm tip command, a path segment, a new trajectory, a modified load application limit, or a revised approach angle.

In an embodiment, the reinforcement learning algorithm includes an agent, observations, an environment, actions, and a reward. The agent is the remotely operated device, the observations include joint angles, speeds, and environment states, the environment is a simulated scene including a payload with which the remotely operated device is to interact and a platform on which the robotic device is implemented, and the reward is distance metric or load metric.

In an embodiment, the trained policy generates the set of one or more higher-level commands based on an input comprising current joint states, sensor readings, environment states, and any partial observation for anomalies.

In an embodiment, the trained policy outputs a single action per timestep as a policy inference, and the set of one or more higher-level commands includes a plurality of policy inferences by the trained policy chained together by the anomaly workaround module to obtain a full command sequence.

In an embodiment, the set of one or more commands is an entire command sequence with differing safe load application to overcome the anomaly.

In an embodiment, the system further includes a simulator module, executed by the at least one processor, configured to test and approve the set of one or more commands generated by the trained policy in a simulation before providing the set of one or more commands to the controller module.

In an embodiment, the trained policy is a general policy trained to handle more than one type of anomaly.

In an embodiment, the anomaly is encoded directly into a state space that is used as input to the trained policy.

In an embodiment, the trained policy is a specific policy trained for a specific type of anomaly.

In an embodiment, the system stores a plurality of policies each trained for a specific type of anomaly, the plurality of policies including the trained policy, and the anomaly workaround module selects the trained policy from the plurality of policies for inference based on metadata associated with the anomaly.

In an embodiment, the anomaly detection module outputs metadata characterizing the anomaly, and the metadata is used as part of a state space input to the trained policy.

In an embodiment, the metadata includes an anomaly type, an anomaly location, or an affected subsystem.

In an embodiment, the higher level command is a command in Cartesian task space and the lower level command is a command issued in Cartesian joint space.

In an embodiment, the higher level command is an abstract or strategic command that is more conceptual than the lower level command and the lower level command is a signal that is directly executable by an actuator of the remotely operated device.

In an embodiment, the state space is assembled from sensor data and telemetry.

In an embodiment, the state space includes contextual data that describes an operational space of the remotely operated device.

In an embodiment, the contextual data includes a status of the remotely operated device itself, surrounding objects, and dynamic factors.

In an embodiment, the dynamic factors include a position of a payload, an obstacle, or a recognized anomaly.

In an embodiment, the state space includes an anomaly flag associated with the anomaly.

In an embodiment, the anomaly flag includes any one or more of an anomaly type, an anomaly location, and an affected subsystem.

In an embodiment, the remotely operated device is any one or more of a robotic manipulator, a planetary rover, and a satellite.

A method of detecting and resolving anomalies in a robotic system is also provided. The method includes: detecting, using at least one processor, an anomaly in telemetry collected during execution of a procedure by a remotely operated device, the procedure comprising a sequence of commands for the remotely operated device to follow; generating, by the at least one processor, a set of one or more higher-level commands that modifies the procedure to respond to the anomaly using a trained policy trained using a reinforcement learning algorithm; and translating, by the at least one processor, the set of one or more commands into a set of one or more lower-level commands to be executed by the remotely operated device.

In an embodiment, the trained policy is implemented as parameters of a neural network that takes in a state space as input and outputs a probability distribution of actions to take within that state space.

In an embodiment, the trained policy is a general policy trained to handle more than one type of anomaly.

In an embodiment, the anomaly is encoded directly into a state space that is used as input to the trained policy.

In an embodiment, the trained policy is a specific policy trained for a specific type of anomaly.

In an embodiment, the method further includes: storing, in a data storage device in communication with the at least one processor, a plurality of policies each trained for a specific type of anomaly, the plurality of policies including the trained policy; and selecting the trained policy from the plurality of policies for inference based on metadata associated with the anomaly.

In an embodiment, detecting the anomaly includes generating metadata characterizing the anomaly, and the metadata is used as part of a state space input to the trained policy.

In an embodiment, the metadata specifies at least one of an anomaly type, an anomaly location, and an affected subsystem.

In an embodiment, the higher-level command is a command in Cartesian task space and the lower-level command is a command issued in Cartesian joint space.

In an embodiment, the higher-level command is an abstract or strategic command that is more conceptual than the lower-level command and wherein the lower-level command is a signal that is directly executable by an actuator of the remotely operated device.

In an embodiment, the remotely operated device is any one or more of a robotic manipulator, a planetary rover, and a satellite.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a space robotic system, according to an embodiment;
Figure 2 is a block diagram of a computer system for reinforcement learning for determining and executing operational workarounds for the robotic system of Figure 1, according to an embodiment;
Figure 3 is a block diagram of a reinforcement learning algorithm architecture, according to an embodiment;
Figure 4 is schematic diagram of the space robotic system of Figure 1 including multiple software components for determining and executing operational workarounds, according to an embodiment;
Figure 5 is a schematic diagram of the space robotic system of Figure 1 including multiple trained reinforcement learning policies, according to an embodiment;
Figure 6 is a flow diagram of a method of using reinforcement learning to identify and implement a workaround for a robotic operation by a robotic device using reinforcement learning, according to an embodiment;
Figure 7 is a flow diagram of a method of using reinforcement learning to support operations performed by a robotic device, according to an embodiment;
Figure 8 is a block diagram of a system for detecting and resolving anomalies in a robotic system, according to an embodiment; and
Figure 9 is a flow diagram of a method of anomaly detection and resolution in a robotic system, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

As used herein, the term "or" is intended to be inclusive unless expressly indicated otherwise or unless the context clearly dictates otherwise. Thus, the expression "A or B" includes A alone, B alone, and A and B together. The term "and/or" likewise includes any and all combinations of the associated listed items.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to robotic systems, and more particularly to space robotic systems that use deep reinforcement learning.

The present disclosure utilizes reinforcement learning (also referred to as "RL") methods like proximal policy optimization, imitation learning, and the like to pre-prepare for anomalies and enable operators to quickly identify procedure updates, control parameter changes, command techniques, and other solutions (such as, for example, new trajectories, modified load application limits, or revised approach angles) when off-nominal scenarios arise. A procedure may include a scripted sequence of commands or steps for a robotic system to follow, such as commands for installing a payload. The present disclosure may further utilize alternative methods like deep imitation learning, memory-enhanced agents for learning under partial observability, meta learning, and few-shot learning.

The reinforcement learning techniques described herein may be used for mission path planning and re-planning in response to off-nominal events or situations.

In many classic robotics applications, reinforcement learning optimizes a single objective such as path efficiency or end-effector accuracy. By contrast, the system of the present disclosure tackles multiple, often competing objectives (e.g., mission success likelihood, load-limit safety margins, anomaly avoidance, time-to-completion) simultaneously. The reinforcement learning agent thus has to dynamically balance constraints that are typical in critical, off-nominal missions, which is something not addressed in more conventional reinforcement learning applications.

While standard reinforcement learning in robotics typically focuses on nominal conditions, like everyday manipulation or navigation, aspects of the described approach of the present disclosure are explicitly aimed at anomaly handling and rapid re-planning under off-nominal conditions (e.g., sensor failures, friction anomalies, partial system degradation). By integrating an anomaly-detection pipeline with reinforcement learning-based workaround generation, the system of the present disclosure may automatically proposes safe, feasible fixes and updates operational scripts.

Further, typical reinforcement learning systems for robotic control may operate using lower level commands (e.g., joint torques or motor movements). The RL system of the present disclosure may issue higher level commands to a controller which then translates the higher level commands to corresponding joint torques. This has the effect of relieving the RL policy of having to learn the kinematics of the manipulator, allowing the RL policy to focus on learning higher-level commands related to solving anomalous contact scenarios.

Additionally, typical RL systems rely on operating in scenarios that were previously seen during training. Embodiments of the methods of the present disclosure are more akin to meta-learning or few-shot learning (sub-areas of RL), which focus on allowing the RL policy to generalize training experience to handle scenarios it has not seen, such as anomalous contact scenarios.

Those skilled in the art will appreciate that, although the embodiments described in the present disclosure are set forth in the context of robotic systems, the disclosed systems and methods for determining operational workarounds for anomalies during operation and reinforcement learning for autonomous control of a remotely operated device are not so limited. The principles and techniques described herein may be implemented in connection with any remotely operated or controllable platform or device, including, without limitation, robotic systems, satellites, planetary rovers, unmanned aerial or marine vehicles, remote-operated industrial machinery, or other systems capable of receiving and executing remote instructions. Accordingly, the scope of the present disclosure should not be construed as being limited to robotic systems alone.

As used herein, the term "remotely operated device" or "remotely operated system" encompasses systems such as satellites, planetary rovers, unmanned aerial vehicles, robotic systems, industrial machinery, or other platforms that are capable of receiving and executing commands from a remote operator, whether or not the device or system further includes autonomous functionality. For example, while example embodiments of the present disclosure describe autonomous robots/machines performing autonomous operations, the system may also be effectively utilized for determining operational workarounds for anomalies during operation and reinforcement learning for autonomous control in non-autonomous (or semi-autonomous) remotely operated devices as well.

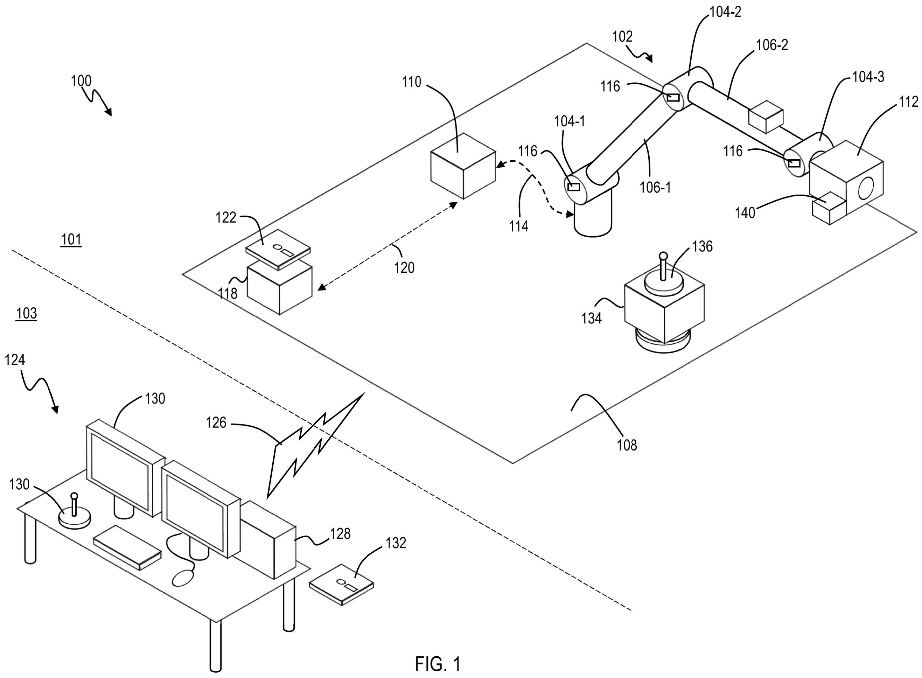

Referring now to Figure 1, shown therein is a robotic system 100 for autonomous control operations, according to an embodiment.

The robotic system 100 is a space-based robotic system. The robotic system 100 is an example of a robotic system for which the reinforcement learning (RL) techniques of the present disclosure may be used. For example, the RL techniques may be used to obtain commands or control parameters for controlling the robotic system 100.

The robotic system 100 is configured to perform one or more types of robotic operations or tasks. The system 100 includes a space segment 101 and a ground segment 103.

The robotic system 100 includes a robotic arm 102. The robotic arm 102 may be a serial robotic manipulator. The robotic arm 102 may be a 6-degree-of-freedom (6-DOF) robotic arm. The robotic arm 102 may be a 7-DOF robotic arm. The robotic arm 102 includes a plurality of booms (or links/linkages) and joints for articulating the robotic arm 102. In an embodiment, the joints include three joints 104-1 to 104-3 (generically referred to as the joint 104, and collectively as the joints 104). In an embodiment, the booms include two booms 106-1, 106-2 (generically referred to as the boom 106, and collectively as the booms 106).

The robotic arm 102 is on a platform 108. The platform 108 may be a moving platform, such as on a spacecraft or rover, or a stationary platform. The platform may be a space station (e.g., International Space Station).

The robotic arm 102 is configured to perform one or more autonomous tasks (referred to simply as "tasks") based on instruction from an arm controller 110. Tasks may be a single action or composed of a sequence of robotic actions or subtasks. The type and nature of the tasks performed by the robotic arm 102 are not particularly limited. Example tasks or subtasks may include free space motion, contact operations, and non-contact operations. Non-contact operations may include free space motion and proximity motion. Free space motion and proximity motion may occur with or without a payload, such as payload 134, attached to the robotic arm 102. Free space motion may be defined as motions of the robotic arm 102 that are outside of proximity (notionally in the volume between worksites that are not occupied by a host spacecraft structure). Free space motion can occur with higher speed of the tip of the robotic arm 102 because the margin between the arm/payload and structure is larger than in proximity, so longer stopping distances or oscillations can be tolerated. Contact operations may include any task that involves an end effector of the robotic arm 102, such as end effector 112, physically interacting with a robotic interface of the payload 134, such as robotic interface 136. In Figure 1, robotic interface 136 is a grapple fixture. Examples of contact operations include grappling payloads, payload installation and uninstallation, and capture of free flyer objects (e.g. visiting vehicles). The robotic arm 102 may physically interact with various types of robotic interfaces 136.

The robotic arm 102 includes an end effector 112 coupled to a free end of the robotic arm 102. The end effector 112 may also be referred to as a tip of the robotic arm 102. The robotic arm 102 manipulates, moves, and positions the end effector 112. The end effector 112 may be an end effector that can be coupled and decoupled from the end of the robotic arm 102 (i.e. picked up and removed).

The robotic system 100 includes a robotic arm controller 110. The arm controller 110 executes control software for controlling movement of the robotic arm 102 (e.g., by controlling joint rate and position of the joints 104). The arm controller 110 may implement a functional layer of the autonomous system including function level control software components. The arm controller 110 may be implemented at a single device or across a plurality of devices. For example, the arm controller 110 may be implemented particularly at a control device local to the robotic arm 102 and partially at an executive control device (e.g. flight computer 118) configured to determine, plan, and schedule robotic operations. Generally, the arm controller 110 controls movement (e.g., rotation) of the joints 104, thereby enabling controlled movement of the robotic arm 102 and ultimately of the end effector 110. The robotic arm 102 and the arm controller 110 are communicatively connected and the connection is represented as a hashed line 114 between the robotic arm 102 and the arm controller 110. The arm controller 110 may include computing components (e.g., processors, data storage) and other control hardware.

The robotic system 100 includes a plurality of sensors, such as joint sensors 116, disposed on and in the environment of the robotic arm 102 for collecting telemetry data and visual imagery about the execution of robotic tasks by the robotic arm 102. The joint sensors 116 are shown as mere examples and it will be understood that other types of sensors for collecting telemetry and visual imagery of different sorts may be present on and in the environment of the robotic arm 102 (e.g., camera system 140).

The sensors may be of multiple sensor types. Example sensors include actuator control units, camera controllers, motor controllers, force torque sensors, joint sensors, and arm controllers.

Example telemetry data that may be collected by the sensors includes temperature, voltage, current, force, joint rates, and joint positions (e.g., of the joints 104), lidar data, etc. The telemetry data collected by the sensors may include time series numerical and categorical data.

For embodiments wherein the sensors include a force moment sensor (FMS), such as described herein, the input telemetry data may include joint positions, joint velocities, joint torques, and temperate data from basic thermal sensors. For embodiments wherein the sensors include a joint torque sensor (JTS), such as described herein, the telemetry data may include joint angle measurements, angular velocities, and possible motor currents or voltages, gearbox twist estimates, motor angles, and motor angular velocities.

It will be understood that the types and positioning of the sensors may vary in different implementations of the system 100.

The sensors, including joint sensors 116, feed the telemetry data to the arm controller 110 and the flight computer 118 (described below).

The robotic system 100 includes an onboard flight computer (or flight computer) 118. The flight computer 118 includes one or more processors for executing software components (or modules) and one or more data storage devices (e.g., computer memory) for story data. The flight computer 118 sends and receives data 120 from the arm controller 110.

The flight computer 118 includes executive control software 122. In some embodiments, the flight computer 118 may be configured to execute one or more trained reinforcement learning policies for inference, simulators, or anomaly detectors as described herein as part of the executive control software 122. Executing reinforcement learning policies for inference may also be referred to as inferencing one or more reinforcement learning policies.

In some embodiments, the flight computer 118 may also include a script executor module as part of the executive control software 122. The script executor module executes task scripts (scripted tasks) corresponding to robotic tasks or operations to be performed by the robotic arm 102. The script executor module sends commands based on execution of the script.

The robotic system 100 further includes a robotic ground operator station 124 (or robotic workstation 124) located in the ground segment 103. The robotic workstation 124 communicates with an uplink/downlink system 126 via a network connection to send and receive data to and from the space segment 101.

The robotic workstation 124 includes one or more computer systems 128 including processors and memories storing processor executable instructions and one or more input/output devices 130 for enabling operator interaction with the computer system 128 and control of the space segment 101 components. For example, a display device of the input/output device 130 may display a user interface to the operator. The computer system of the ground segment 103 executes ground segment software 132 for performing the functions of the robotic workstation 124. In various embodiments, the ground segment software 132 may include software modules for performing any one or more of reinforcement learning, RL policy-based inference (e.g., querying a trained RL policy), simulation based on an output of a trained RL policy, and anomaly detection. The ground segment software 132 includes a user interface module for enabling an operator user to interact with the system 100 (e.g., through displaying data from the space segment 101 and receiving input on data to be sent to the space segment 101).

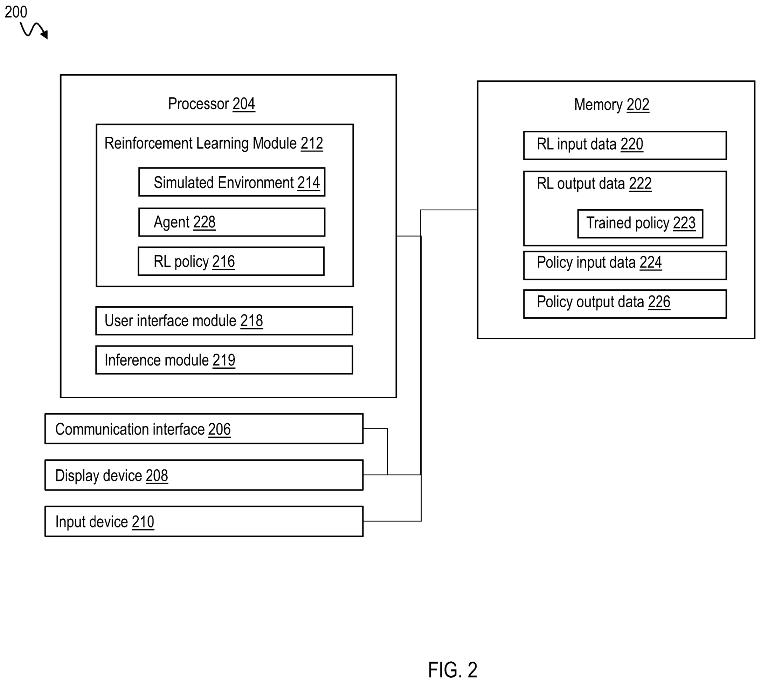

Referring now to Figure 2, shown therein is a computer system 200 for reinforcement learning for autonomous control of a robotic arm, such as the robotic arm 102 of Figure 1, according to an embodiment.

In an embodiment, the computer system 200 may be implemented using the flight computer 118 and/or robotic workstation 124 of Figure 1. It should be noted that, in variations, software modules and components of the system 200 may be implemented or executed at a single computing device or across multiple computing devices (e.g., networked computer devices). In general, the computer system 200 may be used to rapidly perform planning for new payloads and perform quick assessment of responses or workarounds for anomalies detected during operation of the robotic arm 102. In some cases, the computer system 200 may be used to support autonomous control of the robotic arm 102 for berthing operations, anomaly detection, and avoidance of collisions. The computer system 200 may enable tuning of control parameters of the robotic arm 102 for new payload and interfaces, eliminating analysis re-planning effort, and satisfying planning goals like extending the life of the robotic arm 102.

The system 200 includes a display device 208 for displaying data generated by the system 200. The display device 208 may be located at a user device of the system 200, such as robotic workstation 124 of Figure 1.

The system 200 includes a memory 202 and a processor 204 in communication with the memory 202.

The system 200 includes a communication interface 206 for transmitting and receiving data. The communication interface 206 may include a network interface. The communication interface 206 may transmit and receive data via the uplink/downlink system 126 of Figure 1.

The system 200 includes an input device 210 for providing input data to the system 200 by a user, such as through a graphical user interface. The input device 210 may include a pointing device (e.g., a mouse), a keypad, or the like. The input device 210 may be the input/output devices 130 of the robotic workstation 124.

The processor 204 includes a reinforcement learning module 212, a user interface module 218, and an inference module 219. The user interface module 218 displays a user interface for enabling a user to interact with the reinforcement learning module 212. This interaction may include the input of RL input data 220 and the review of RL output data 222, described below.

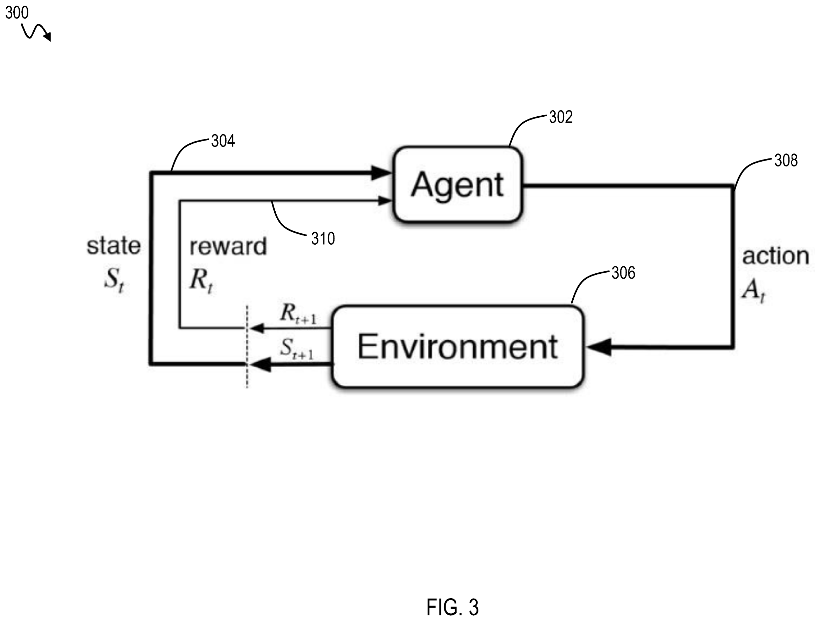

The reinforcement learning (RL) module 212 is configured to train a policy 216 using an RL algorithm or process. In an embodiment, the RL algorithm may be implemented according to the architecture in Figure 3.. The policy 216 is a strategy that an agent 228 uses in pursuit of goals, where the policy 216 dictates the actions that the agent 228 takes as a function of the agent's state and the environment. Generally, as the RL module 212 executes the RL algorithm, the policy 216 is updated based on data and algorithms to modify the approach of the robotic arm 102 (agent 228). The robotic arm 102 moves based on known actions and based on new actions generated. The robotic arm 102 learns to select the actions that result in the maximum rewards. Over time, the updated policy 216 becomes better and converges. The robotic arm 102 may then be used with the converged policy (i.e., trained policy 223, described below) in new circumstances.

The RL module 212 includes a simulated environment 214 and the agent 228. In an embodiment, the simulated environment 214 is AGX and Unity ML-Agents or the like. The simulated environment 214 is a virtualization of components of the space segment 101, such as the robotic arm 102, the platform 108, and the payload 134 of Figure 1. The components (also referred to as agent objects) may be computer-aided design (CAD) models imported from SpaceClaim into Unity. The agent 228 may be a CAD model of the robotic arm 102 in the environment 214. The simulated environment 214 may simulate actions of the agent objects, including the agent 228, based on the type of RL policy to be trained.

The RL module 212 receives RL input data 220 as input and outputs RL output data 222. The RL input data 220 and RL output data 222 are stored in memory 202.

The RL input data 220 may include a state of the simulated environment 214, reward function parameters, and configuration data of the environment 214. The state data of the simulated environment 214 may include, for example, joint angles, velocities, and sensor readings of the agent 228 (robotic arm 102). The configuration data of the simulated environment 214 may include, for example, positions of obstacles in the environment 214. The RL input data 220 may include constraints or safety thresholds specified by a user. The RL input data 220 may include a model of the control software 122 of Figure 1. The control software 122 may include parameters that need to be specified outside of the RL process.

The RL output data 222 includes a trained policy 223. The trained policy 223 may include a set of learned parameters that can generate higher level commands of the robotic arm 102 that can be interpreted by a controller to generate lower level commands (e.g., joint angles, velocities, or torque commands). The trained policy 223 may include a neural network checkpoint or a policy function.

The RL module 212 may be used to generate any number of trained policies 223. The RL module 212 may be used to generate trained policies 223 for a plurality of different tasks or procedures (or portions thereof) performed by the robotic arm 102. Trained policies 223 may be generated for any one or more of free space motion operations, contact operations, and non-contact operations by the robotic arm 102. Each trained policy 223 may generate different commands for the robotic arm 102 as output.

Free space operations may include efficiently, safely, and accurately achieving a target pose for the point-of-resolution (POR) of the robotic arm 102, while avoiding obstacles or operational keep-out zones.

The RL module 212 for free space operations may be configured to include a scaling reward being proximity to a target, a scaling penalty being proximity to self-collision, and a hard penalty being self-collision. The proximity to the target may include the position of the end effector 112 relative to the location of the target and an error in the orientation of the end effector 112.

Proximity operations may include efficiently, safely, and accurately achieving a target pose for the POR of the robotic arm 102, while avoiding obstacles or operational keep-out zones.

The RL module 212 for proximity operations may be configured to include a scaling reward being proximity to the target, scaling penalties being proximity to self-collision and proximity to obstacles or keep-out zones, and hard penalties being self-collision, collision with obstacles and collision with keep-out zones.

Reinforcement learning for proximity operations may be used to identify optimal trajectories for maneuvering the robotic arm 102 around the platform 108 and providing autonomous control of the robotic arm 102 to do so.

Contact operations may include efficiently and safely installing and uninstalling a payload (e.g., the payload 134 of Figure 1). The payload may be an orbital replaceable unit ("ORU").

The RL module 212 for contact operations may be configured to include a scaling reward being proximity to an installed or uninstalled pose of a payload or to a pose of the end effector 112, a scaling penalty being proximity to self-collision and contact forces, and hard penalties being self-collision and interface load exceedances.

Reinforcement Learning for contact operations may be used to identify optimal sequences of commands for the robotic arm 102 for achieving a successful install of the payload and provide autonomous control of the robotic arm 102 to do so.

For example, for issues arising during anomalous contact operations, such as a sticky or damaged interface, or a force sensor failure, the trained policy 223 may be used to generate a planning workaround and procedure modifications to overcome the issues safely.

In an embodiment, the RL module 212 may be executed to generate trained policy 216 for off-nominal operations performed by the robotic arm 102.

For off-nominal operations, configuring the RL module 212 may include modifying the environment 306 that the agent 302 interacts with such that the environment 306 represents the off-nominal conditions. The trained policy 223 may find optimal off-nominal operation strategies within the environment 306 as modified. Examples of modifications to the environment 306 to represent off-nominal scenarios include friction at the joint 104, friction at the end effector 112, FMS failure, interface debris, and inadvertent contact with a structure. A trained policy 223 for off-nominal operations may be trained to handle anomalies as either static or dynamic parts of the environment. For example, where the robotic arm 102 experiences degraded free space operations, such as higher than nominal friction acting on a joint 104 due to wear and tear, the trained policy 223 may be trained to avoid trajectories that are likely to stress the robotic arm 102.

In an embodiment, the policy 216 may be trained using the reinforcement learning module 212 as per the following.

The simulated environment 214 is configured to construct the robotic arm 102 as an agent 228 for interacting with an environment of the agent 228. The robotic arm 102 interacts with the environment based on commands generated by the policy 216, which results in states and rewards. The movement of the robotic arm 102 is virtualized in the simulated environment 214. The simulated environment 214 generates rewards as feedback to the policy 216.

During training, the RL module 212 keeps track of experiences and updates decision-making methods, also referred to as the policy 216. The policy 216 is the method through which the agent makes decisions. The experiences tracked by the RL module 212 may differ depending on the RL algorithm used for training.

In a first example, the RL algorithm may use a Monte-Carlo method requiring one-step experiences (such as a single state, action, reward, next state, and next action tuple) to update the policy. In a second example, the RL algorithm may use additional methods that may use a series of (or multi-step) experiences to update the policy.

The RL module 212 may be used to train a policy 216 to find operational strategies for the robotic system 100 by rewarding and penalizing specific behaviour during training of the policy 216, according to the objectives of the various modes of operation.

The inference module 219 implements the trained policy 223 generated by the RL module 212 in software. In an embodiment, the trained policy 216 may be implemented as parameters of a neural network. The neural network takes in the state of the environment 214 as input and outputs a probability distribution of the actions to take by the agent 228 within that state.

The trained policy 223 receives policy input data 224 as input and outputs policy output data 226.

Generally, the policy input data 224 includes a state space that is a vectorized representation of a current state of the environment. The state space may capture anything in the environment that would affect action choice (e.g., obstacle position should be captured because it needs to be known when certain actions will be blocked by the environment). Broadly, environment refers to all relevant contextual data that describes the robot's operational space, including the robot's own status, surrounding objects, and any dynamic factors (e.g., positions of payloads, obstacles, or recognized anomalies). The current state may be obtained through sensor readings, which may include virtualized sensors if operating within a simulator. The current state of the environment may be assembled from sensor data, telemetry, and any internal models (for example, joint angles, end-effector position, obstacle locations, or anomaly flags). These state representations may come from onboard sensors, external tracking systems, or known mission plans.

The policy input data 224 may include, for example, joint states, sensor readings, environment states (such as, for example, positions of obstacles in the environment 214), and partial observations of anomalies. Partial observation for anomalies typically originates from an anomaly detection module, which may provide partial or probabilistic information (e.g., "sensor drift detected," or "possible friction increase in joint 3"). This anomaly-related data may then be merged into the robot's overall state input, so that the trained policy 223 "knows" there is an off-nominal condition. "Partial observation" indicates that the policy 223 may not have full certainty about the anomaly's cause or extent, but receives enough cues (flags, metrics) to adapt its commands.

The policy input data 224 may further include higher order observations, such as the relative distance between two objects within the environment 214.

The policy output data 226 includes a probability of the actions to take by the robotic arm 102 (agent 228) given a state of the environment 214. Typically, the policy output data 226 includes the next action or command to be executed by the robotic arm 102. Such next action or command may include, for example, higher level commands that can be interpreted by a controller into lower level commands such as joint angles (kinematic joint angle commands, dynamic joint angle commands), tip commands, or path segments. Other examples of commands that may be output by the trained policy 223 include Operator Command Joint Mode (OCPM) commands, Manual Augmented Mode (MAM) commands, motor torques, motor voltages, high-level waypoints, approach angles, velocity profiles, and manipulator gripper states. OCPM commands may include commands for a control mode of the robotic arm 102 where an end effector position is specified. MAM commands may include commands for a control mode where an end effector velocity is specified.

The trained policy 223 may output a single action per timestep. A full command sequence may be generated by chaining together policy inferences (e.g., p(s1) = a1, execute a1 observe s2, p(s2) = a2, execute a2 and observe s3...).

The trained policy 223 may interact with the environment by outputting commands to be handled by established control modes in the flight software. The control modes may include, for example, one or more of a control mode for providing joint angles to control the robotic arm 102 (e.g., Operator-Commanded Joint Mode or OJCM), a control mode for providing position and orientation information of the end effector 112 (e.g., Operator-Commanded Point-of-Resolution Mode or OCPM), a control mode for providing velocity of the end effector 112 (e.g., Manual Augmented Mode or MAM), and a control mode for providing position and orientation information of the end effector 112 (e.g., Multi-Axis Move POR Incrementally or MAMPI).

The commands output by the trained policy 223 may be higher level commands that can be translated or interpreted by a controller module (not shown) into lower level commands (e.g., actuator signals). The controller module may be implemented as part of flight software onboard the robotic arm. The controller module may be real-time software for generating actuator signals for the robotic arm 102, such as motor currents and motor voltages, that are used to move the robotic arm 102.

The trained policy 223 may include a stochastic case or a deterministic case. In the stochastic case, an action is chosen according to a computed action-probability distribution. In the deterministic case, the probability distribution is collapsed such that the action with the highest probability has a 100% chance of being selected.

Referring now to Figure 3, shown therein is a reinforcement learning (RL) algorithm 300 for autonomous control of a robotic arm, according to an embodiment. The algorithm 300 may be executed by the RL module 212 of Figure 2.

The RL algorithm 300 uses elements including an agent 302, observations 304 (also referred to as state 304), an environment 306, actions 308, and reward signals 310.

In general, the RL algorithm 300 includes a timestep in which the agent 302 is provided the state 304 of the environment 306 as input and decides on an action 308 to take based on its current strategy.

The strategy may be a learned mapping from the state 304 to the action 308 that maximizes the reward 310 and may include the policy or decision-making rules of the agent 302.

The agent 302 performs a task multiple times and adapts the strategy to maximize the reward 310 that the agent 302 obtains from its decisions across all timesteps in the task.

By the end of training, the agent's learned behaviour is optimized to perform the task such that the agent 302 maximizes the reward signals 310 over time.

The agent 302 is an "actor" that can observe the environment 306, decide the best course of actions 308 to take using the observations 304, and execute the actions 308 within the environment 306. For example, the agent 302 may be the robotic arm 102 of Figure 1.

The observations 304 include what the agent 302 perceives about the environment 306, which may be numeric and visual. For example, the agent 302 may "perceive" where it is in the environment 306 based on joint angles and joint rates (of an articulated joint of a robotic arm, such as robotic arm 102). The observations 304 may include, for example, the joint angles and the joint rates of the robotic arm 102 and states of the environment 306.

The environment 306 includes a simulated scene (e.g. a Unity^{™} scene) containing the agents 302. The simulated scene provides the environment 306 in which the agents 302 observe, act, and learn. For example, the scene may be a scene containing the robotic arm 102, the platform 108, and the payload 134 of Figure 1. The environment 306 further generates the reward signals 310 based on the action 308 taken in the present state of the environment 306.

The set of actions 308 that an agent 302 can take can be discrete or continuous. For example, the actions 308 may include continuous actions taken from a motor or voltage controller of the robotic arm 102, or commands given to the robotic arm control software (e.g., executed by the arm controller 110 or onboard flight computer 118 of Figure 1). The commands may include joint commands.

The reward signals 310 include scalar values to assess the performance of the agent 302. For example, the reward signals 310 may include Euclidean distance between the end effector 112 and the robotic interface 136 of the payload 134 of Figure 1. The reward signals 310 may further include metrics such as load of the payload 134.

In an embodiment, the RL algorithm 300 may work as follows.

In each timestep, the agent 302 is provided with the state of the environment 306 as input and decides on an action to take based on its current strategy. Transitions between states is performed by the AGX physics engine, which dynamically adjusts the pose of the virtualized robotic arm 102 based on the actions 308 taken by the agent 302.

The agent 302 is asked to perform a task many times and adapts its strategy to maximize the reward it obtains from these decisions across all timesteps in the task.

By the end of training, the agent's 302 learned behavior is optimized to perform the task in such a way to maximize the collected reward over time.

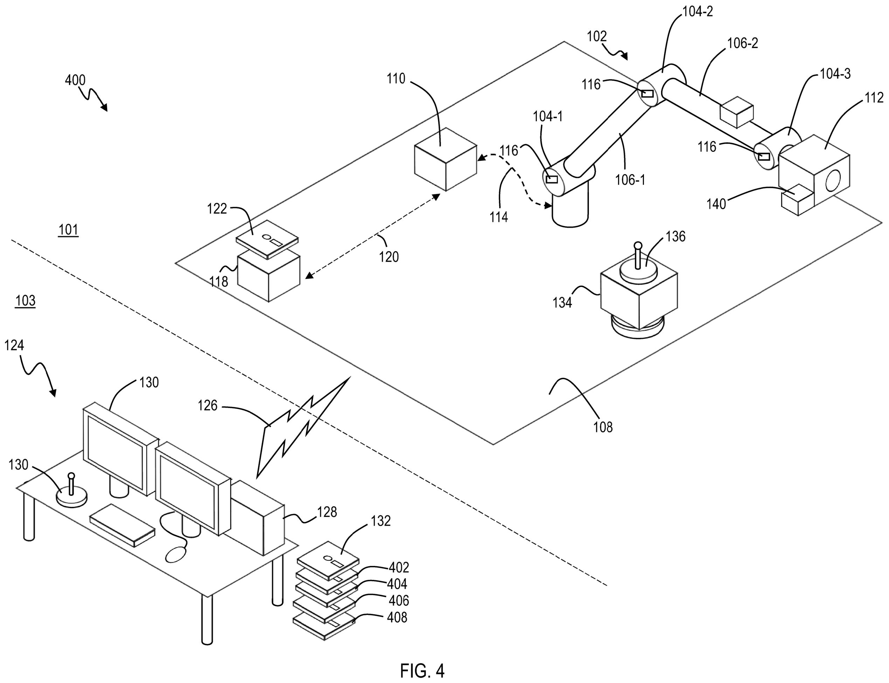

Referring now to Figure 4, shown therein is a robotic system 400, according to an embodiment.

The robotic system 400 is an embodiment of the robotic system 100 of Figure 1. Like references denote like components with respect to Figure 1 (e.g., 118 corresponds to 418, etc.). Certain components present in Figure 4 with corresponding components in Figure 1 may not be described in detail. It is understood that such components perform the same or similar function as the corresponding component in Figure 1.

The system 400 further includes software components including an anomaly detection module 402, a trained policy module 404 (e.g., implementing trained policy 216), a simulator module 406, and an assessment module 408. The trained policy module 404 implements a policy that has been trained with a reinforcement learning algorithm, such as trained policy 216.

The software components 402-408 are implemented in the ground segment 103 at computer system 128 of robotic workstation 124. In other embodiments, any one or more of software components 402-408 may be implemented in the space segment 101, such as at the flight computer 118.

During an operation, the flight computer 118 executes a procedure for performing an operation by the robotic arm 102, such as grabbing the payload 134 using the end effector 112.

During execution of the operation, the system 400 collects telemetry and visual imagery via sensors, such as the sensors 116 and the camera system 140.

The telemetry is provided to the flight computer 118 and downlinked to the ground segment 103 via the uplink/downlink system 126.

The telemetry is provided as input to the anomaly detection module 402.

The anomaly detection module 402 detects anomalous signatures or off-nominal states in the telemetry. For example, the anomaly detection module 402 may detect debris on the robotic interface 136 of the payload 134.

The data output by the anomaly detection module 402 is provided as input to the trained policy 404 to determine commands to overcome the anomaly.

Commands generated by the trained policy 404 are provided as input to the simulator module 406.

The simulator module 406 runs a simulation with the commands output by the trained policy 404 to see the outcome.

The data generated by the simulator module 406 is provided to the assessment module 408.

The assessment module 408 assesses the data generated by the simulator module 406 to confirm whether or not the commands from the trained policy 404 meet requirements (e.g., safety, etc.).

The assessment module 408 may be configured to support manual assessment or perform assessment autonomously.

The assessment performed by the assessment module 408 may include any one or more of checking if the commands keep joints of the robotic arm 102 within permissible joint limits, checking that commands do not result in the load on the robotic arm 102 exceeding load thresholds, checking that the robotic arm 102 avoids collisions if moved by the commands, and meeting additional mission or safety rules.

If the assessment module 408 determines that the commands output by the trained policy 404 are valid commands, the commands are incorporated into a flight product that is uplinked to the space segment 101 via the uplink/downlink system 126 and executed by the flight computer 118.

The assessment performed by the assessment module 408 ensures that the reinforcement learning solution is feasible.

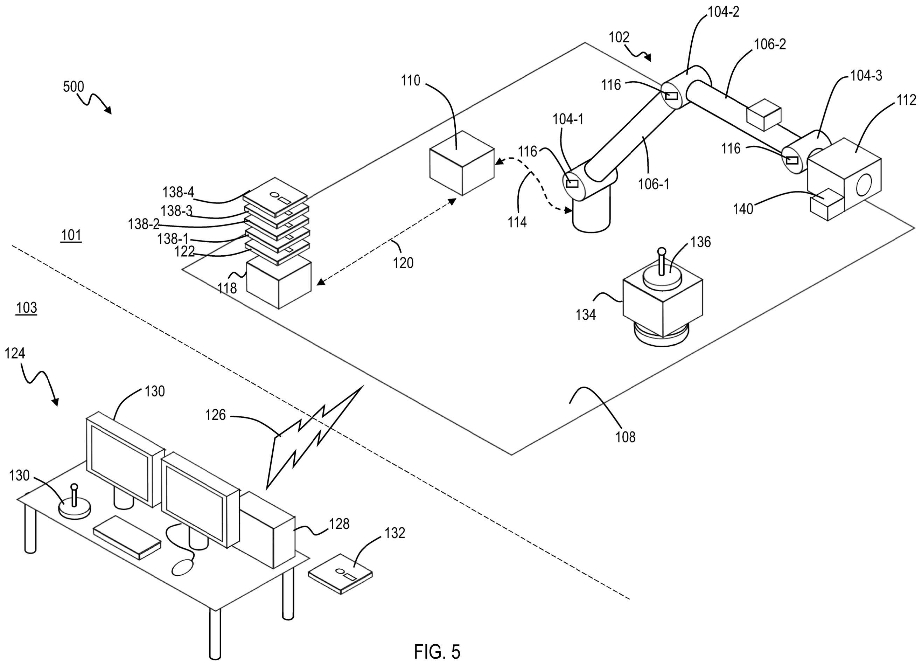

Referring now to Figure 5, shown therein is a robotic system 500, according to an embodiment.

The robotic system 500 is an embodiment of the robotic system 100 of Figure 1. Like references denote like components with respect to Figure 1 (e.g., 118 corresponds to 518, etc.). Certain components present in Figure 5 with corresponding components in Figure 1 may not be described in detail. It is understood that such components perform the same or similar function as the corresponding component in Figure 1.

The robotic system 500 includes a plurality of trained policies (e.g., trained policy 216 of Figure 2) for a plurality of modes of operation. The trained policies have all be trained using a reinforcement learning process.

The trained policy for each mode of operation is implemented in a corresponding software module 138-1, 138-2, 138-3, 138-4 (generically referred to as module 138 and collectively as modules 138) of the flight computer 118.

In other embodiments, the modules 138 may be implemented in the ground segment 103 (e.g., at computer 128), or some combination of the space and ground segments 101, 103.

Each module 138 is configured to execute a different trained policy that has been trained for a specific mode of operation of the robotic arm 102 using reinforcement learning.

For example, modes of operation for which trained policies may be generated and implemented at modules 138 include free space operations, proximity operations, contact operations, and off-nominal operations.

In operation, the decision of which trained policy to use and when to use the chosen trained policy may be determined manually, such as by a human operator at workstation 124, or autonomously by the executive control software 122.

In some cases, the selection and execution of the trained policy may be performed in response to an anomaly detected during a robotic operation (e.g., detected by anomaly detection module 402 of Figure 4). The anomaly may have been detected by an anomaly detection and diagnosis algorithm that recognizes the anomaly in telemetry and classifies the anomaly.

In some embodiments, detected anomalies may include metadata including identifying information about the anomaly, arm subsystem, or operation type that is used by the executive control software 122 to determine which module 138 to execute.

For example, performance of a particular contact operation by the robotic arm 102 may result in a detected anomaly. The anomaly is sent to the executive control software, which executes a module 138 that includes the trained policy for the particular contact operation to generate commands that provide a potential workaround for the anomaly.

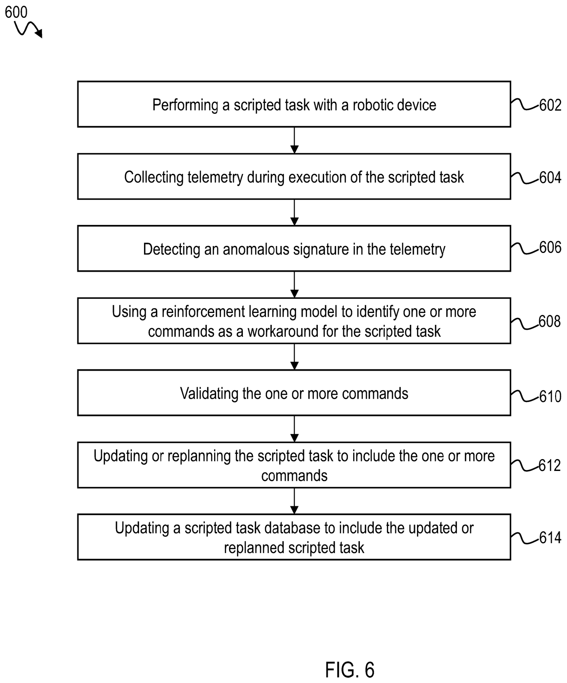

Referring now to Figure 6, shown therein is a method 600 of using reinforcement learning to identify and implement a workaround for a robotic operation by a robotic device using reinforcement learning, according to an embodiment.

The method 600 may be implemented by any of the systems of Figures 1-5. In variations, the method 600 may be performed entirely in the ground segment 103, entirely in the space segment 101, or in some combination of the ground and space segments.

At 602, the method 600 includes performing a scripted task with a robotic device. The robotic device may be, for example, the robotic arm 102 of Figures 1, 4, or 5 or any other robotic device configured to perform autonomous tasks (e.g., a rover).

At 604, the method 600 includes collecting telemetry during the execution of the scripted task by the robotic device. The telemetry is collected by one or more sensors or systems on or around the robotic device.

At 606, the method 600 includes detecting an anomalous signature in the telemetry. The anomalous signature may indicate an off-nominal behaviour in a subsystem of the robotic device. The anomalous signature may be detected by a human operator reviewing telemetry on a computer system. The anomalous signature may be detected autonomously by a computer program. For example, the anomalous signature may be detected by an anomaly detection module, such as anomaly detection module 402 of Figure 4.

At 608, the method 600 includes using a trained policy generated using a reinforcement learning process to generate one or more commands for the robotic device as a workaround to respond to the detected anomaly. The trained policy may be implemented as parameters of a neural network. The trained policy may be the trained policy 216 of Figure 2 or other trained policy as described herein. The workaround may represent modification to one or more steps in a procedure to be executed by the robotic device.

At 610, the method 600 includes validating the one or more commands. Validating commands may include determining that execution of the one or more commands will or is likely to meet safety or other requirements. Validating the commands may include testing the one or more commands in a simulated environment. In variations, the simulated environment may be implemented in a simulator module executed by one or more computer systems.

At 612, the method 600 includes updating or replanning the scripted task to include the one or more commands. In variations, this may be done manually by a human operator through a computer system or autonomously by a computer program executing on a computer system.

At 614, the method 600 includes updating a scripted task database to include the updated or replanned scripted task. The database is stored on one or more data storage devices in communication with one or more processors.

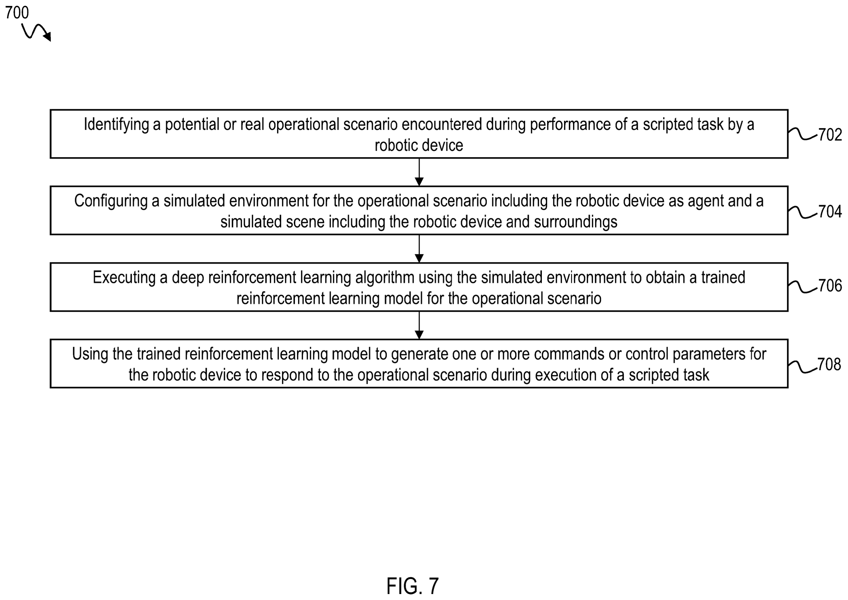

Referring now to Figure 7, shown therein is a flow diagram of a method 700 of using reinforcement learning to support operations performed by a robotic device, according to an embodiment.

At 702, the method 700 includes identifying a potential or real operational scenario encountered during performance of a scripted task by a robotic device. An example of an operational scenario may be an anomaly or planning a new task from scratch (e.g., a robotic arm interacting with a new robotic interface).

At 704, the method 700 includes configuring a simulated environment for the operational scenario including the robotic device as agent and a simulated scene including the robotic device and surroundings.

At 706, the method 700 includes executing a deep reinforcement learning algorithm using the simulated environment to obtain a trained policy for the operational scenario.

At 708, the method 700 includes using the trained policy to generate one or more commands or control parameters for the robotic device to respond to the operational scenario during execution of a scripted task. The trained policy may be used to, for example, plan a task to be performed by the robotic device or a portion thereof (which may be de novo or a workaround (e.g., in response to an anomaly)).

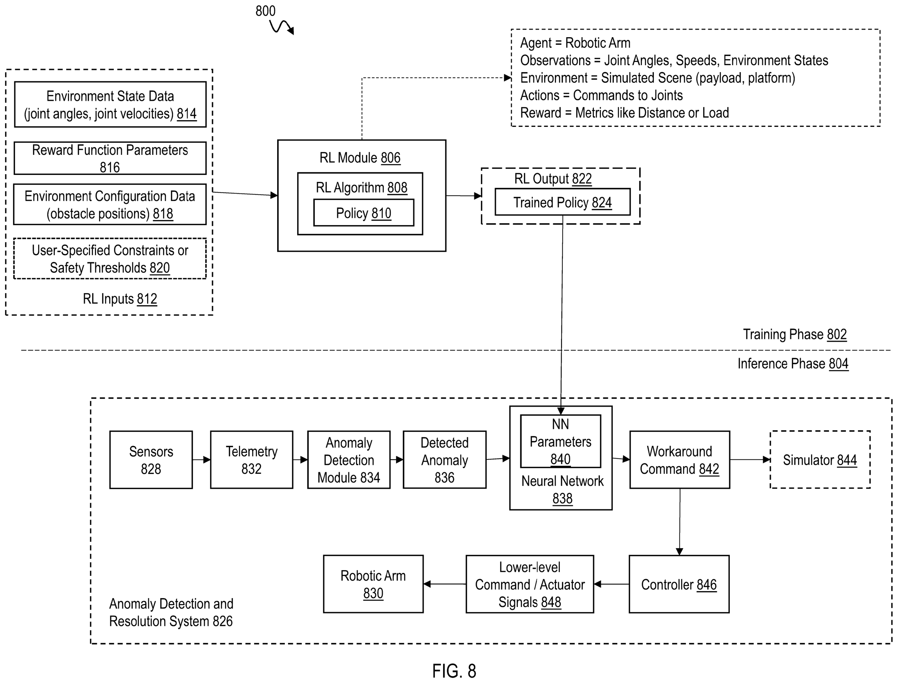

Referring now to Figure 8, shown therein is a system 800 for detecting and resolving anomalies in a robotic system, such as robotic system 100 of Figure 1, according to an embodiment. Aspects and components of the system 800 may be implemented on one or more computing devices that may be implemented in a ground segment, space segment, or some combination thereof, such as any of the computing devices described herein.

The system 800 includes a training phase 802 and an inference phase 804. Generally, the training phase 802 is used to train or learn a trained policy using reinforcement learning techniques and then the trained policy is used in the inference phase 804 to identify potential workarounds to anomalies detected during operations performed by the robotic system.

The training phase 802 includes an RL module 806. The RL module implements an RL algorithm 808 that includes a policy 810 (which may be referred to as an RL policy), such as described herein.

The RL module 806 configures components of the RL algorithm 808 including an agent, observations, an environment, actions, and rewards.

The RL module 806 receives RL inputs 812 that are used by the RL algorithm 808. The RL inputs 812 includes environment state data 814, reward function parameters 816, and environment configuration data 818. The RL inputs 812 may include user-specified constraints or safety thresholds 820.

The RL module 806 runs the RL algorithm 808, which generates an RL output 822 that includes a trained policy 824. The trained policy 824 is the output of the training phase 802.

The inference phase 804 includes an anomaly detection and resolution system 826. The anomaly detection and resolution system 826 implements a pipeline for detecting anomalies and identifying and implementing workarounds that adjusts behaviour of the robotic arm to resolve, address, or mitigate impact of the anomalies.

The anomaly detection and resolution system 826 includes sensors 828 on and in the environment of a robotic arm 830 of the robotic system that collect telemetry 832 during execution of a procedure or operation by the robotic arm 830. The telemetry 832 is output from the sensors 828 to an anomaly detection module 834. The anomaly detection module 834 is configured to recognize and classify anomalies 836 (or off-nominal signatures) in the telemetry 832 that are indicative or suggestive of an off-nominal scenario. Anomalies 836 includes various metadata describing the anomaly, which may include an anomaly type, anomaly location, and affected subsystem. This information may be encoded in one or more data flags or fields associated with the anomaly. The anomaly detection module 834 may use machine learning or a rules-based approach to detect anomalies 836, for example. The detected anomaly 836 (or some subset of data describing or contained in the anomaly 836) is output from the anomaly detection module 834 to a neural network 838 with parameters 840 defined using the trained policy 824 from the training phase 802 (i.e., the trained policy 824 is implemented as the NN parameters 840). In an embodiment, the anomaly detection system 836 may output information that is packaged as part of the current state or environment input to the trained policy 824. The outputted anomaly information may include, for example anomaly type, anomaly location, or affected subsystem. For example, if the anomaly 836 is "debris at the end effector", the input to the trained policy 824 may include a flag or field associated with the anomaly 836 indicating that debris is present and which hardware components are compromised. In this way, the trained policy 824 may generate workaround commands (e.g., alternate trajectories, reduced force) that specifically respond to that anomaly.

The neural network 838 outputs a set of one or more commands 842 that address or respond to the anomaly 836. The commands 842 may be referred to as workaround commands. The commands 842 may be considered "higher level" commands (particularly relative to lower level commands, described below).

In some embodiments, the workaround command 842 is tested in simulation using a simulator module 844. The simulator 844 may be a high-fidelity simulator, digital twins, or any other suitable simulator. When the simulator 844 is present, proceeding in the pipeline may be contingent on the simulation meeting requirements (i.e., the commands 842 are approved).

The workaround command 842 is output to a controller module 846. The controller 846 module controls subsystems of the robotic arm 830. The controller 846 may be referred to as flight software (or be a component thereof). The controller 846 is implemented along with the robotic arm 830 (i.e., onboard) in the space segment. The controller 846 implements software controlling the robotic arm 830. The controller 846 receives the workaround command 842 as input and translates the workaround command 842 (which is a higher level command) into a set of one or more lower level commands or actuator signals 848. The lower level commands or actuator signals 848 may include, for example, joint torques, motor movements, motor currents, motor voltages, or the like. The robotic arm 830 is then controlled by the lower level commands 848 by providing the lower level commands 848 to one or more subsystems of the robotic arm 830.

By having the system 800 work in this way with respect to higher and lower level commands 842, 848, it has the effect of relieving the policy 810 of having to learn the kinematics of the robotic arm 830, allowing the policy 810 to focus on learning higher level commands related to solving anomalous contact scenarios. Further, unlike traditional applications of RL, the system 800 tackles multiple, often competing objectives (e.g., success likelihood, load limit safety margins, anomaly avoidance, time to completion) simultaneously, having to dynamically balance those constraints. An advantage of using reinforcement learning for operational strategies is that rate limits and self-collision boundaries are respected. The use of a policy trained using reinforcement learning enables the ability to find optimal operational strategies that provide a tradeoff between opposing goals (e.g., efficient yet accurate movements), and adapting strategies in real-time.

Further, anomaly information obtained by anomaly detection and resolution system 826 may be incorporated into the trained policy 824 in at least three ways.

In a first approach, policies are trained for specific anomalies. The detected anomaly 836 may be used in a higher-order system (e.g., implemented as one or more software modules) which determines which trained policy 824 to inference in order to come up with a viable workaround. For example, the system 800 includes a first trained policy for a first anomaly type and a second trained policy for a second anomaly type. When the anomaly detection system 826 detects an anomaly of the first type, the anomaly is sent to the higher-order system, the higher-order system determines that the first trained policy should be used, and the system 800 uses the first trained policy to generate a viable workaround.

In a second approach, the detected anomaly 836 may be encoded directly into the state space that is used as input to the trained policy 824. In this scenario, one or more RL policies 810 may be trained to handle a multitude of anomalies. Such trained policies may be referred to as "general" policies, as they are not specific to a particular type of anomaly.

In a third approach, some combination of the first approach and the second approach may be used.

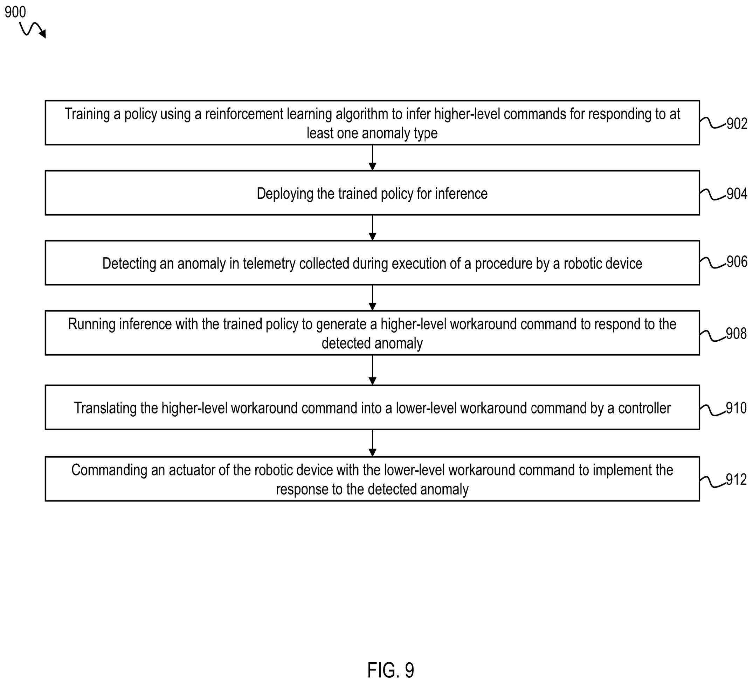

Referring now to Figure 9, shown therein is a method 900 of anomaly detection and resolution in a robotic system, according to an embodiment.

The method 900 may be implemented using any of the systems described herein.

At 902, the method 900 includes training a policy using a reinforcement learning algorithm to infer higher-level robotic device commands that respond to at least one anomaly type. The robotic device may be a robotic arm.

Higher-level commands are abstract or strategic commands. The abstract or strategic commands are generally more conceptual than lower-level commands. Lower-level commands are commands that can be executed directly by actuators of the robotic device. Lower-level commands may be signals such as motor voltages or joint torques. In an example, an abstract or higher-level command may be "move the arm tip to coordinate (X, Y, Z)" or "reduce the applied force by a (specified amount)", while a corresponding lower-level command may specify individual actuator currents that implement the higher-level command and are executed by the actuators directly.

In some cases, higher-level commands may be commands in Cartesian task space and lower-level commands may be commands issued in Cartesian joint space. For example, a higher-level command may specify a position of the robotic device (e.g., an end effector) in Cartesian task space or velocity of the robotic device in Cartesian task space and lower-level commands for these higher-level commands are issued in Cartesian joint space.

At 904, the method 900 includes deploying the trained policy for inference. In an embodiment, the trained policy is implemented as a neural network.

In a space-based application, the trained policy may be deployed on a flight computer that is operable in a space segment in which the robotic device operates. In other embodiments, the trained policy may be deployed on a computer system in the ground segment.

The trained policy may be a "general" policy trained to handle more than one type of anomaly. In some cases, a general policy may be trained to handle a multitude of anomaly types.

The trained policy may be a "specific" policy. A specific policy is a policy trained for a specific type of anomaly. A specific policy can be contrasted with a general policy as described above.

At 906, the method 900 includes detecting an anomaly in telemetry collected during execution of a procedure by the robotic device. The procedure includes a sequence of commands for the robotic device to follow.

The anomaly may be detected using one or more software modules or computer programs configured to detect anomalies (autonomous anomaly detection). The anomaly may be detected and flagged by a human user through a graphical user interface. The anomaly may be detected using autonomous anomaly detection and then verified or configured by a human user through a graphical user interface.

The anomaly includes metadata characterizing the anomaly. The metadata may include, for example, an anomaly type, an anomaly location, and/or an affected subsystem. The metadata may include one or more flags categorizing the anomaly. In some cases, the anomaly metadata may be used to determine which of a plurality of trained policies available should be inferenced.

At 908, the method 900 includes running inference with the trained policy to generate a higher-level workaround command to respond to the detected anomaly.

In embodiments where there are multiple trained policies available for inference (e.g., specific policies for specific types of anomalies), the trained policy used for inference may be selected from the multiple available trained policies based on anomaly metadata (e.g., anomaly type, location, affected subsystem). The multiple policies may be stored with a mapping to anomaly metadata to enable their selection based on anomaly metadata. The selection may be performed manually by a human user through a graphical user interface. The selection may be performed automatically by a software module or computer program running on a computing device. Such software module or computer program may be part of an anomaly detection module, part of an anomaly workaround module, or a separate module in communication with an anomaly detection module (for receiving anomaly data) and an anomaly workaround module (for outputting the trained policy to inference).

When running inference using the trained policy, metadata of the detected anomaly may be used as part of a state space input to the trained policy. For example, the anomaly may be encoded directly into the state space that is used as input to the trained policy.

At 910, the method 900 includes translating the higher-level workaround command into a lower level workaround command by a controller.

As described, the lower-level command may be a signal, such as actuator voltage, current, or torque/force that is directly executable by an actuator of the robotic device. In the case of a robotic arm, the lower-level command may be a motor voltage, a joint torque, or a joint velocity.

At 912, the method 900 includes commanding an actuator of the robotic device with the lower-level workaround command to implement the response to the detected anomaly.

What is claimed is the systems and methods as generally and specifically described herein.

While the above description provides examples of one or more apparatus, methods, or systems, it will be appreciated that other apparatus, methods, or systems may be within the scope of the claims as interpreted by one of skill in the art.

## Claims

1. A system for detecting and resolving anomalies in a remotely operated device system, the system comprising:
an anomaly detection module, executed by at least one processor, configured to detect an anomaly in telemetry collected during execution of a procedure by a remotely operated device, the procedure comprising a sequence of commands for the remotely operated device to follow;
an anomaly workaround module, executed by the at least one processor, implementing a trained policy configured to generate a set of one or more higher level commands that modifies the procedure to respond to the anomaly, the trained policy configured using a reinforcement learning algorithm; and
a controller module, executed by the at least one processor, configured to translate or interpret the set of one or more higher level more commands into a set of one or more lower level commands to be executed by the remotely operated device.

2. The system of claim 1, wherein the trained policy is implemented as parameters of a neural network that takes in a state space as input and outputs a probability distribution of actions to take within that state space.

3. The system of claim 1, wherein the set of one or more lower level commands comprises actuator signals for one or more subsystems of the remotely operated device.

4. The system of claim 1, wherein the procedure is a contact operation between the remotely operated device and a payload on which the remotely operated device acts.

5. The system of claim 1, wherein the trained policy outputs a single action per timestep as a policy inference, and wherein the set of one or more higher-level commands includes a plurality of policy inferences by the trained policy chained together by the anomaly workaround module to obtain a full command sequence.

6. The system of claim 1, further comprising a simulator module, executed by the at least one processor, configured to test and approve the set of one or more commands generated by the trained policy in a simulation before providing the set of one or more commands to the controller module.

7. The system of claim 1, wherein the trained policy is a general policy trained to handle more than one type of anomaly.

8. The system of claim 1, wherein the trained policy is a specific policy trained for a specific type of anomaly.

9. The system of claim 8, wherein the system stores a plurality of policies each trained for a specific type of anomaly, the plurality of policies including the trained policy, and wherein the anomaly workaround module selects the trained policy from the plurality of policies for inference based on metadata associated with the anomaly.

10. The system of claim 1, wherein the anomaly detection module outputs metadata characterizing the anomaly, and wherein the metadata is used as part of a state space input to the trained policy.

11. The system of claim 10, wherein the metadata includes an anomaly type, an anomaly location, or an affected subsystem.

12. The system of claim 1, wherein the higher level command is an abstract or strategic command that is more conceptual than the lower level command and wherein the lower level command is a signal that is directly executable by an actuator of the remotely operated device.

13. The system of claim 1, wherein the remotely operated device is any one or more of a robotic manipulator, a planetary rover, and a satellite.

14. A method of detecting and resolving anomalies in a remotely operated device system, the system comprising:
detecting, using at least one processor, an anomaly in telemetry collected during execution of a procedure by a remotely operated device, the procedure comprising a sequence of commands for the remotely operated device to follow;
generating, by the at least one processor, a set of one or more higher-level commands that modifies the procedure to respond to the anomaly using a trained policy trained using a reinforcement learning algorithm; and
translating, by the at least one processor, the set of one or more commands into a set of one or more lower-level commands to be executed by the remotely operated device.

15. The method of claim 14, wherein the trained policy is implemented as parameters of a neural network that takes in a state space as input and outputs a probability distribution of actions to take within that state space.
